# EUROPÄISCHE PATENTSCHRIFT

(11) **EP 0 841 240 B1**
(45) Veröffentlichungstag und Bekanntmachung des Hinweises auf die Patenterteilung: **02.08.2006**
(21) Anmeldenummer: 97119133.3
(22) Anmeldetag: 03.11.1997
(51) Int. Cl.: B62D 21/09, B62D 27/06

(54) **Hohlprofil**
Hollow beam
profilé creux

(30) Priorität: 07.11.1996 DE 19645962
(43) Veröffentlichungstag der Anmeldung: 13.05.1998
(73) Patentinhaber: Bayerische Motoren Werke Aktiengesellschaft, 80788 München (DE); NORSK HYDRO ASA, 0240 Oslo (NO)
(72) Erfinder: Scheucher, Klaus-Peter, 80799 München (DE); Clausen, Edvin List, 6270 Toender (DK)
(74) Vertreter: Bücken, Helmut

(56) Entgegenhaltungen:
- DE-A- 4 341 206
- FR-A- 2 689 945
- GB-A- 2 109 433
- US-A- 5 567 005

## Beschreibung

Die Erfindung bezieht sich auf ein Hohlprofil nach dem Oberbegriff des Anspruchs 1.

Zur Verbindung eines als Träger ausgebildeten Hohlprofils mit einem Anbauteil ist es bekannt, beispielsweise einen Lagerbock zu verwenden. Derartige Lagerböcke werden außenseitig an das Hohlprofil angesetzt und über Verschraubung oder Verschweißung mit diesem verbunden. Nachteilig ist hierbei der Platzbedarf für den Lagerbock sowie der außermittige Kraftangriff am Hohlprofil.

In vielen Fällen, z. B. in der US 5,567,005, wird anstelle eines Lagerbocks eine Buchse verwendet, die durch das Hohlprofil durchgeführt ist und eine direkte Befestigung des Anbauteils ermöglicht. Die Buchse ist üblicherweise an den beiden äußeren Begrenzungswänden des Hohlprofils mit diesen verschweißt. Nachteilig ist hierbei, daß die Buchse den gesamten Querschnitt des Hohlprofils durchsetzt. So ist es bei bekannten Hohlprofilen, die beispielsweise die vorderen und/oder hinteren Längsträger eines Kraftfahrzeugs bilden, nicht möglich, den Hohlraum im Längsträger zur Aufnahme von energieabbauenden Pralldämpfern zu nutzen.
Ein weiterer Nachteil der bekannten Verschweißung der Buchse liegt darin, daß beide Seiten des Hohlprofils für die Verschweißung zugänglich sein müssen. In Abhängigkeit von den vorliegenden Einbauverhältnissen und dem gewünschten Montageablauf sind Fälle denkbar, in denen eine Verschweißung an der dem Anbauteil abgewandten Begrenzungswand des Hohlprofils nicht erwünscht oder nicht möglich ist.

Weiter ist aus der FR 2 689 945 A1 ein Hohlprofil mit zwei Kammern bekannt, in das eine Befestigungsbuchse für einen Außenspiegel eingestzt ist. Die Buchse ist mit der innenliegenden Trennwand des Hohlprofils verschraubt.

Aufgabe der Erfindung ist es, ein Hohlprofil mit einer alternativen befestigung der eingesetzten Buchse bereitzustellen.

Diese Aufgabe wird durch die Merkmale des Anspruchs 1 gelöst.

Gemäß Anspruch 1 wird ein Hohlprofil mit zwei oder mehr Kammern verwendet, in das die Buchse so eingesetzt wird, daß sie nur eine (äußere) Kammer durchsetzt bzw. zumindest eine Kammer frei bleibt. Daraus ergibt sich der Vorteil, daß auch größere Einbauteile wie beispielsweise Kühlwasserleitungen oder Pralldämpfer im Inneren des Hohlprofils von der oder den freibleibenden Kammer(n) aufgenommen werden können. Erfindungsgemäß stützt sich die Buchse im Inneren des Hohlprofils an einer Trennwand zwischen zwei Kammern ab und ragt dabei nicht oder nur geringfügig in die benachbarte Kammer hinein. Wesentlich ist ferner, daß die Buchse an die Trennwand (und zweckmäßigerweise auch an die äußere Begrenzungswand) des Hohlprofils spielfrei angebunden ist, um ein Ausschlagen dieser Aufnahmestellen zu vermeiden. Eine formschlüssige Verbindung allein ist hierbei in der Regel nicht ausreichend. Nach Möglichkeit ist eine kraftschlüssige Verbindung anzustreben, durch die ein dauerhaft fester Sitz gewährleistet wird und Relativbewegungen zwischen Buchse und Hohlprofil ausgeschlossen werden.

Von entscheidender Bedeutung ist insbesondere die spielfreie Anbindung der Buchse an die schwer zugängliche innenliegende Trennwand. Erfindungsgemäß wird die Buchse innenseitig über einen Preßsitz mit der Durchgangsöffnung in der Trennwand verbunden. Damit wird eine form- und kraftschlüssige Verbindung erreicht, durch die auch unter hohen, in die Buchse eingeleiteten Querkräften ein Kippen an der innenseitigen Befestigungsstelle nicht mehr möglich ist. Hiermit sind auch Mikrobewegungen und Materialermüdungen ausgeschlossen, die bei einer nur formschlüssigen Verbindung im Lauf der Zeit Verschleißerscheinungen erzeugen und ein Ausschlagen der Verbindungsstelle bewirken würden. Durch den Preßsitz wird eine dauerhaft spielfreie Verbindung gewährleistet, die hohe Kräfte aufzunehmen vermag. Eine axiale Vorspannung zwischen den beiden Anbindungsstellen der Buchse am Hohlprofil kann den Preßsitz in vorteilhafter Weise unterstützen.

Anspruch 2 zeigt eine Möglichkeit zur Erzeugung eines Preßsitzes auf. Durch Einpressen des konischen Endabschnittes der Buchse wird eine Vorspannung in axialer und radialer Richtung der Buchse erreicht. Die Buchse kann in einfacher Weise von außen in das Hohlprofil eingebracht werden, ohne daß weitere Maßnahmen zur Fixierung der Buchse im Inneren oder an der abgewandten Seite des Hohlprofils erforderlich wären. Bei Mehrkammer-Hohlprofilen steht die Buchse mit ihrem konusförmigen Endabschnitt nur geringfügig in die der Trennwand benachbarte Kammer hinein, so daß nahezu der gesamte Querschnitt dieser Kammer für die Durchführung von Einbauteilen frei bleibt.

Eine weitere Möglichkeit zur Erzeugung eines Preßsitzes besteht gemäß Anspruch 3 darin, die Buchse mit Spiel in die Durchgangsöffnung der Trennwand bzw. der abgewandten Begrenzungswand einzusetzen und nachträglich aufzuweiten.
Dies kann nach Anspruch 4 beispielsweise dadurch erfolgen, daß in die endseitige Ausnehmung der Buchse ein Keil eingesetzt wird, der mit der Buchse verspannt wird und diese in radialer Richtung aufweitet, wodurch ein spielfreier Sitz der Buchse in der Durchgangsöffnung erreicht wird.
Besonders vorteilhaft ist hierbei die Ausgestaltung der Erfindung nach Anspruch 5. Durch das Innengewinde im Keil kann dieser von der Seite des Anbauteils her über eine Schraube mit der Buchse verspannt werden. Hierbei erfolgt die Montage der Buchse ausschließlich anbauteilseitig. Alternativ kann der Keil auch über eine in die Buchse eingreifende Schraube von der entgegengesetzten Seite vorgespannt werden. Hierzu ist bei Mehrkammer-Hohlprofilen allerdings eine Zugangsöffnung in der der Buchse gegenüberliegenden äußeren Begrenzungswand des Hohlprofils erforderlich, durch die der Keil mit der Buchse verschraubt werden kann.

Die Buchse kann zusätzlich auch mit der Trennwand bzw. der abgewandten Begrenzungswand verklebt werden. Grundsätzlich ist auch eine Verschweißung der Buchse mit der Trennwand (ohne Preßsitz) möglich, wobei diese Verbindungstechnik in der Regel wegen der schlechten Zugänglichkeit im Inneren des Hohlprofils ausscheidet.

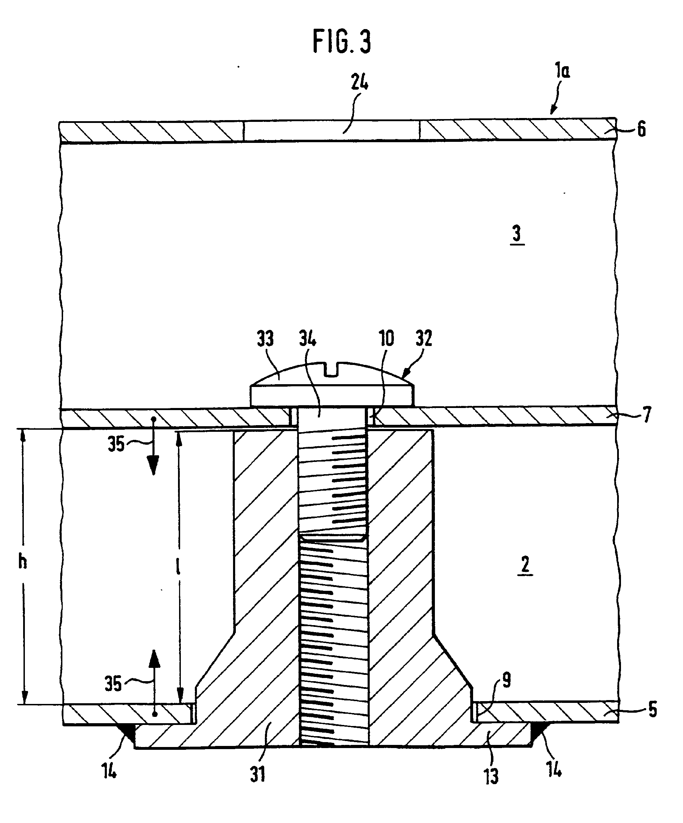

Eine in Fig.3 dargestellte, nicht erfindungsgemäße Variante zeigt für Mehrkammer-Hohlprofile eine weitere grundsätzliche Möglichkeit auf, die Buchse spielfrei mit der Trennwand zu verbinden. Durch die Verschraubung wird eine kraftschlüssige Verbindung geschaffen, die keinerlei Relativbewegungen mehr zuläßt. Die Schraubverbindung kann wieder gelöst werden, so daß die Buchse bei Beschädigung ohne weiteres gegen eine neue Buchse austauschbar ist. Für die Verschraubung ist in der der Buchse gegenüberliegenden äußeren Begrenzungswand des Hohlprofils wiederum eine Zugangsöffnung erforderlich. Durch einen entsprechend flachen Schraubenkopf kann die der Buchse abgewandte Kammer weitestgehend freigehalten werden.

Die Ansprüche 6 und 7 betreffen die Anbindungsstelle der Buchse an ihrer Durchtrittsstelle durch die dem Anbauteil zugewandte äußere Begrenzungswand des Hohlprofils.

Auch an dieser Durchtrittsstelle ist eine spielfreie Verbindung anzustreben, um eine dauerhafte Verbindung zu erreichen und beispielsweise einen innenseitigen Preßsitz durch mögliche Relativbewegungen an der Außenseite nicht zu gefährden. Besonders einfach gestaltet sich hierbei eine Verschweißung der Buchse entlang der Durchgangsöffnung in der äußeren Begrenzungswand, da die Schweißstelle von außen leicht zugänglich ist (Anspruch 6). Hierdurch wird eine kippsichere und hochbelastbare Verbindung erreicht. Prinzipiell kann die Buchse mit der äußeren Begrenzungswand auch verklebt werden.

Grundsätzlich sind alle Möglichkeiten zur Erzeugung einer spielfreien Verbindung auch an der äußeren Begrenzungswand anwendbar. So ist es durchaus möglich, die Buchse auch hier über einen Preßsitz mit dem Hohlprofil zu verbinden. Auch ein Aufspreizen oder Verschrauben ist grundsätzlich denkbar, wegen des erforderlichen Platzbedarfes in der Regel jedoch problematisch, da an der Außenseite des Hohlprofils das mit dem Hohlprofil zu verbindende Anbauteil mit der Buchse verschraubt wird.

Der Absatz an der Durchführung der Buchse durch die äußere Begrenzungswand (Anspruch 7) erzeugt eine definierte Einstecktiefe für die Buchse in das Hohlprofil. Außerdem wird für das Anbauteil eine vergrößerte Anlagefläche an der Buchse erreicht. Der Absatz überdeckt zudem in vorteilhafter Weise einen Ringspalt um die Durchgangsöffnung in der äußeren Begrenzungswand, so daß hier keine engen Toleranzen eingehalten werden müssen. Außerdem ermöglicht der Absatz eine einfache Verschweißung der Buchse mit der äußeren Begrenzungswand.

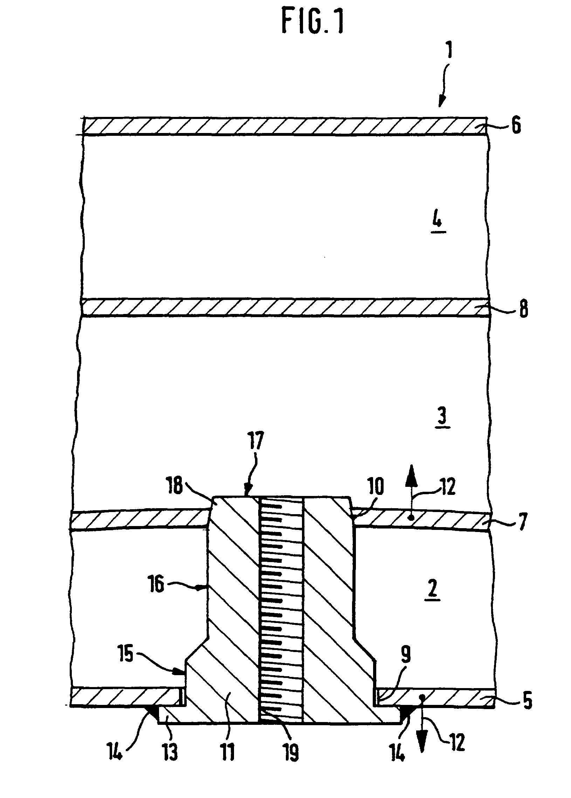

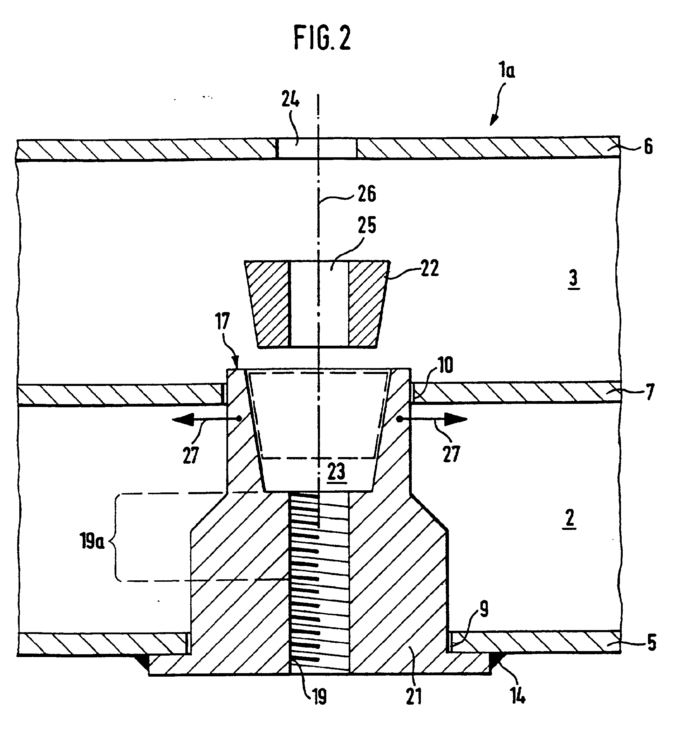

Mögliche Ausführungsbeispiele der Erfindung sind in der Zeichnung nachfolgend näher dargestellt und erläutert. Die Figuren 1 und 2 zeigen verschiedene Ausführungsmöglichkeiten der Erfindung im Querschnitt.

Figur 1 zeigt ein Hohlprofil 1, das beispielsweise von einem Strangprofil aus einer Aluminiumlegierung gebildet wird und einen vorderen Längsträger eines Kraftfahrzeuges bildet. Das Hohlprofil 1 weist eine untere, eine mittlere sowie eine obere Kammer 2, 3 bzw. 4 auf, die von einer unteren und einer oberen äußeren Begrenzungswand 5 bzw. 6 sowie zwei innenliegenden Trennwänden 7 und 8 begrenzt werden.
In den Figuren 2 und 3 ist jeweils ein Hohlprofil 1a mit zwei Kammern 3 und 4 dar gestellt, wobei gleiche oder gleichwirkende Teile mit denselben Bezugszahlen bezeichnet sind wie in Figur 1.
In die untere Begrenzungswand 5 sowie in die Trennwand 7 sind (beispielsweise mit einem Stufenbohrer) zueinander fluchtende Durchgangsöffnungen 9 bzw. 10 eingebracht.

Das Ausführungsbeispiel der Figur 1 zeigt eine in das Hohlprofil 1 eingesetzte Buchse 11. Die Buchse 11 ist rotationssymmetrisch aufgebaut und liegt mit ihrem flanschartigen Absatz 13 an der Außenseite der Begrenzungswand 5 an. Ein Innengewinde 19 in der Buchse 11 dient der Aufnahme einer nicht dargestellten Schraube zur Befestigung eines Anbauteils, beispielsweise eines Achsträgers oder eines querverlaufenden Motorträgers. Ein erster Bereich 15 der Buchse 11 durchsetzt die mit entsprechendem Übermaß ausgeführte Durchgangsöffnung 9 in der Begrenzungswand 5. Der Bereich 15 geht nachfolgend in einen Bereich 16 mit kleinerem Durchmesser über, der am trennwandseitigen Endabschnitt 17 der Buchse 11 einen Konus 18 aufweist. Mit diesem Konus 18 ist die Buchse 11 in die innere Durchgangsöffnung 10 eingepreßt, so daß die Durchgangsöffnung 10 in axialer und radialer Richtung mit der Einpreßkraft beaufschlagt wird. Die Länge der Buchse 11 sowie die Durchmesser von Durchgangsöffnung 10 und Konus 18 sind so aufeinander abgestimmt, daß bei einer spaltfreien Anlage des Absatzes 13 an der Außenseite der Begrenzungswand 5 die beiden Wände 5 und 7 durch die Buchse 11 in Richtung des Pfeils 12 gegeneinander vorgespannt sind. Diese Vorspannung bleibt nach der Verschweißung des Absatzes 13 mit der Begrenzungswand 5 (umlaufende Schweißnaht 14) erhalten und unterstützt den spielfreien Sitz der Buchse 11 in der Trennwand 7. In Figur 1 ist die Vorspannung beispielhaft durch die Wölbung der Trennwand 7 in Richtung der Kammer 3 veranschaulicht.

Die Buchse 21 gemäß Figur 2 wird zunächst mit Spiel in die innere Durchgangsöffnung 10 der Trennwand 7 eingesetzt. Nachfolgend wird über ein Gegenstück 22 ein Preßsitz erzeugt. Das Gegenstück 22 ist kegelstumpfförmig ausgebildet und wird in eine korrespondierende Ausnehmung 23 am Endabschnitt 17 der Buchse 21 eingesetzt. Es ist mit einer Durchgangsbohrung 25 versehen, durch die eine nur schematisch dargestellte Schraube 26 durchgeführt ist, die in den oberen Teil 19a des Innengewindes 19 eingreift. Mit dem Verschrauben des Gegenstücks 22 mit der Buchse 21 wird der obere Endabschnitt 17 der Buchse 21 in Richtung der Pfeile 27 radial nach außen aufgeweitet und ein Preßsitz mit der Trennwand 7 des Hohlprofils 1 erzeugt. Das Gegenstück 22 kann - wie dargestellt - zusammen mit der Buchse 21 eingeführt werden, so daß eine nur verhältnismäßig kleine Zugangsöffnung 24 in der gegenüberliegenden Begrenzungswand 6 des Hohlprofils 1a erforderlich ist, durch die die Verschraubung von Gegenstück 22 und Buchse 21 erfolgen kann. Ebenso ist es selbstverständlich möglich, das Gegenstück 22 und die Schraube 26 über eine Zugangsöffnung 24 mit entsprechend großem Durchmesser in das Hohlprofil 1a einzubringen.

Wird das Gegenstück 22 (abweichend von der Darstellung der Figur 2) mit einem Innengewinde versehen, so kann es über eine durch die Buchse 21 hindurchgeführte Schraube mit der Buchse 21 verspreizt werden. Für diese Ausführungsform ist keine Zugangsöffnung 24 an der dem Anbauteil abgewandten oberen Begrenzungswand 6 erforderlich. Vorteilhafterweise besteht das Gegenstück 22 hierbei aus Stahl, mit entsprechender Belastbarkeit des Innengewindes, während die Buchse 21 beispielsweise aus einer Leichtmetall-Legierung bestehen kann.

Die Buchse 31 gemäß Figur 3 die eine nicht erfindungsgemäße Variante zeigt, ist über eine Schraube 32 mit einem flachen Schraubenkopf 33 mit der Trennwand 7 des Hohlprofils 1a verschraubt. Die Verschraubung erfolgt wiederum über eine Zugangsöffnung 24 in der Begrenzungswand 6. Im Gegensatz zu den Ausführungsbeispielen gemäß der Figur 1 und 2 ist es nicht erforderlich, die Durchgangsöffnung 10 maßlich exakt auf die Buchse 31 abzustimmen, da die Durchgangsöffnung 10 lediglich der Durchführung des Schraubenschaftes 34 dient und nicht mit der Buchse 31 verpreßt wird. Vorteilhaft ist es jedoch, die wirksame Innenlänge l der Buchse 31 geringfügig kleiner zu bemessen als die Höhe h der Kammer 2, so daß sich nach erfolgter Verschraubung eine Vorspannung zwischen der Begrenzungswand 5 und der Trennwand 7 in Richtung der Pfeile 35 ergibt. Figur 3 zeigt den Zustand vor dem endgültigen Festziehen der Schraube 32.

## Patentansprüche

1. Hohlprofil (1, 1a) mit oder mehr Kammern (2, 3, 4), mit einer Buchse (11, 21) zur Befestigung eines Anbauteils,
wobei das Hohlprofil (1, 1 a) wenigstens eine innenliegende Trennwand (7, 8) aufweist, die den Querschnitt des Hohlprofils (1, 1a) in einzelne Kammern (2, 3, 4) unterteilt, mit zueinander fluchtenden Durchgangsöffnungen (9, 10) in der Trennwand (7) und einer äußeren Begrenzungswand (5) des Hohlprofils (1, 1a), **dadurch gekennzeichnet, dass** die Buchse (11, 21) im Bereich ihres einen Endabschnitts (17) über einen Presssitz in die Durchgangsöffnung (10) in der Trennwand (7) eingesetzt ist.

2. Hohlprofil nach Anspruch 1,
**dadurch gekennzeichnet, dass** die Buchse (11) an ihrem dem Anbauteil abgewandten Endabschnitt konisch ausgebildet ist, mit einem anfänglichen Querschnitt, der geringfügig kleiner ist als die lichte Weite der Durchgangsöffnung (10) in der Trennwand (7) bzw. der zweiten Begrenzungswand und sich nachfolgend erweitert.

3. Hohlprofil nach Anspruch 1,
**dadurch gekennzeichnet, dass** der dem Anbauteil abgewandte Endabschnitt (17) der Buchse (21) einen Querschnitt aufweist, der geringfügig kleiner ist als die lichte Weite der Durchgangsöffnung (10) in der Trennwand (7) bzw. in der zweiten Begrenzungswand, wobei Mittel (22, 23, 26) zum Aufweiten des Endabschnitts (17) in radialer Richtung (27) vorgesehen sind.

4. Hohlprofil nach Anspruch 3,
**dadurch gekennzeichnet, dass** die Buchse (21) an ihrem dem Anbauteil abgewandten Endabschnitt (17) eine sich konisch erweiternde Ausnehmung (23) für ein keilförmiges Gegenstück (22) aufweist.

5. Hohlprofil nach Anspruch 4,
**dadurch gekennzeichnet, dass** das Gegenstück ein Innengewinde aufweist.

6. Hohlprofil nach einem der vorangegangenen Ansprüche,
**dadurch gekennzeichnet, dass** die Buchse (11, 21) im Bereich der Durchführung durch die dem Anbauteil benachbarte Begrenzungswand (5) mit dieser stoffschlüssig verbunden ist.

7. Hohlprofil nach einem der vorangegangenen Ansprüche,
**dadurch gekennzeichnet, dass** die Buchse (11, 21) im Bereich der Durchführung durch die dem Anbauteil benachbarte Begrenzungswand (5) einen Absatz (13) aufweist, der außenseitig an der Begrenzungswand (5) anliegt.

## Claims

1. A hollow profile (1, 1a) with two or more chambers (2, 3, 4) and a socket (11, 21) for fastening an attached part,
wherein the hollow profile (1, 1a) has at least one internal partition (7, 8) which divides the cross-section of the hollow profile (1, 1 a) into individual chambers (2, 3, 4) with aligned passage openings (9, 10) in the partition (7) and in an outer boundary wall (5) of the hollow profile (1, 1 a),
**characterised in that** an end portion (17) of the socket (11, 21) is force-fitted into the passage opening (10) in the partition (7).

2. A hollow profile according to claim 1,
**characterised in that** the end portion of the socket (11) remote from the attached part is conical and widens out from an initial cross-section which is slightly smaller than the internal width of the passage opening (10) in the partition (7) or in the second boundary wall.

3. A hollow profile according to claim 1,
**characterised in that** the end portion (17) of the socket (21) remote from the attached part has a cross-section which is slightly smaller than the internal width of the passage opening (10) in the partition (7) or in the second boundary wall, wherein means (22, 23, 26) are provided for expanding the end portion (17) in the radial direction (27).

4. A hollow profile according to claim 3,
**characterised in that** the end portion (17) of the socket (21) remote from the attached part has a conically widening recess (23) for a wedge-shaped mating member (22).

5. A hollow profile according to claim 4,
**characterised in that** the mating member has an internal screwthread.

6. A hollow profile according to any of the preceding claims,
**characterised in that** the socket (11, 21) is connected by the material to the boundary wall in the region of the passage through the said wall adjoining the attached part.

7. A hollow profile according to any of the preceding claims,
**characterised in that** in the region of the passage through the boundary wall (5) adjoining the attached part the socket (11, 21) has a shoulder (1 3) which externally abuts the boundary wall (5).

## Revendications

1. Profilé creux (1, 1a) doté de deux chambres ou plus (2, 3, 4), avec un manchon (11, 21) pour fixer un accessoire, le profilé creux (1, 1a) présentant à l'intérieur au moins une paroi de séparation (7, 8) qui divise la section transversale du profilé creux (1, 1a) en chambres individuelles (2, 3, 4), avec des ouvertures de passage (9, 10) alignées les unes aux autres dans la paroi de séparation (7) et une paroi de délimitation extérieure (5) du profilé creux (1, 1a),
**caractérisé en ce qu'**
au niveau de sa partie d'extrémité (17), le manchon (11, 21) est installé par un ajustage serré dans l'ouverture de passage (10) ménagée dans la paroi de séparation (7).

2. Profilé creux selon la revendication 1,
**caractérisé en ce que**
le manchon (11) est de forme conique au niveau de sa partie d'extrémité opposée à l'accessoire et présente une section transversale de départ légèrement inférieure à la largeur utile de l'ouverture de passage (10) ménagée dans la paroi de séparation (7) ou la deuxième paroi de délimitation, qui s'élargit ensuite.

3. Profilé creux selon la revendication 1,
**caractérisé en ce que**
la partie d'extrémité (17) du manchon (21) opposée à l'accessoire présente une section transversale légèrement inférieure à la largeur utile de l'ouverture de passage (10) ménagée dans la paroi de séparation (7) ou dans la deuxième paroi de délimitation, et des moyens (22, 23, 26) sont prévus pour élargir la partie d'extrémité (17) dans la direction radiale (27).

4. Profilé creux selon la revendication 3,
**caractérisé en ce que**
le manchon (21) présente, au niveau de sa partie d'extrémité (17) opposée à l'accessoire, un évidement (23) qui s'élargit en forme de cône pour une pièce complémentaire en coin (22).

5. Profilé creux selon la revendication 4,
**caractérisé en ce que**
la pièce complémentaire présente un taraudage.

6. Profilé creux selon l'une des revendications précédentes,
**caractérisé en ce que**
le manchon (11, 21) est, au niveau de la traversée de la paroi de délimitation (5) adjacente à l'accessoire, relié à celle-ci par une liaison de matière.

7. Profilé creux selon l'une des revendications précédentes,
**caractérisé en ce que**
le manchon (11, 21) présente, au niveau de la traversée de la paroi de délimitation (5) adjacente à l'accessoire, un épaulement (13) situé à l'extérieur sur la paroi de délimitation (5).
